# EUROPÄISCHE PATENTANMELDUNG

(11) **EP 1 246 488 A1**
(43) Veröffentlichungstag der Anmeldung: **02.10.2002**
(21) Anmeldenummer: 01107367.3
(22) Anmeldetag: 26.03.2001
(51) Int. Cl.: H04Q 7/38

(54) **Verfahren zur automatischen Bestimmung einer ortsabhängigen Kommunikationsadresse**

(71) Anmelder: Siemens Schweiz AG, 8047 Zürich (CH)
(72) Erfinder: Akeret, Felix, 8182 Hochfelden (CH)
(74) Vertreter: Berg, Peter

(57) **Zusammenfassung**

Für verschiedene Dienste und Anwendungen stellt sich das Problem, dass Kommunikationsadressen vom jeweiligen Standort des betreffenden Kommunikationsgerätes abhängig sind. Es wird ein Verfahren zur automatischen Bestimmung einer relativen Kommunikationsadresse in einem Kommunikationsnetz von einem mit dem Kommunikationsnetz verbindbaren Kommunikationsgerät vorgeschlagen, das auf einem dem Kommunikationsgerät zugeordneten oder integrierten Ortserkennungsmodul beruht. Vor Aufbau einer Verbindung erfolgt mittels des Ortserkennungsmoduls eine Bestimmung des Aufenthaltsortes (POS, LOC). Daraus wird die Zugehörigkeit zu einem Gebiet (GR, FR) ermittelt und davon abhängig wird in einem weiteren Verfahrensschritt die relative Kommunikationsadresse festgelegt. Dieses dezentrale Verfahren eignet sich für eine Vielfalt von Kommunikationsgeräten.

## Beschreibung

Die vorliegende Erfindung betrifft ein Verfahren zur automatischen Bestimmung einer relativen Kommunikationsadresse nach dem Oberbegriff des Patentanspruchs 1.

Besonders in der Mobilkommunikation aber auch in der Kommunikation ab Festnetz stellt sich das Problem, dass Rufnummern, die zu bestimmten Diensten wie z.B. Notrufnummern oder Rufnummern von Diensteanbieterinnen wie Banken oder Internet-Providern (genannt "Service Provider") vom Standort oder von der Telekommunikationsdiensteanbieterin (meist "Carrier" genannt) abhängig sind. In der Mobilkommunikation mittels GSM kann das Problem teilweise in einer dezentralen Lösung so angegangen werden, in dem entweder aufgrund einer Zellinformation (Cell Broadcast) oder aufgrund der auf einem Mobiltelefon ohnehin verwertbaren Identität der Telekommunikationsdiensteanbieterin in einer im Mobiltelefon geführten Tabelle die gewünschte Rufnummer nachschlagbar ist. Mit oder ohne direkte Benutzerinteraktion kann im Anschluss daran diese Rufnummer gewählt werden. Möglich ist auch eine zentrale Lösung mittels "Intelligent Network" (IN); mit solchen Techniken angebotene ortsabhängige Dienste werden vom Fachmann als "location based services" bezeichnet.

In EP 0 957 370 A1 ist ein Verfahren angegeben, dass in einer Kombination des globalen Positionierungssystems (GPS) und eines zellulären Mobilfunksystem (GSM) erlaubt, einerseits eine differentielle Fehlerkorrektur bezüglich GPS an die Kommunikationsgeräte eines zellulären Mobilfunksystems zu übermitteln. Andererseits erfolgt bei Abwesenheit eines auswertbaren GPS-Position eine Ortsbestimmung über Laufzeitmessungen innerhalb wenigstens einer Mobilfunkzelle. Nachteilig ist, dass zur Lösung dieses Problems eine komplexe zentrale Infrastruktur notwendig ist und dass die Kommunikationsgeräte auf die vorgesehenen Protokolle angepasst sein müssen.

Mit der hohen Mobilität der Kommunikationsteilnehmer und mit der integrierten Kommunikation, d.h. Sprache, Daten und Bild über ein einheitliches Zugangsverfahren stellt sich das Problem, abhängig vom jeweiligen Standort die für den jeweiligen Benutzer zutreffende diensteunabhängige Kommunikationsadresse zu bestimmen. So sind Internet-Service-Provider nicht überall über eine weltweit einheitliche Telefonnummer erreichbar, aus tarifären Gründen sind oft regional verschiedene Rufnummern vorgesehen. Für bestimmte produkteabhängige Dienste sind auch URL's bzw. "second level domain names" sowie E-Mail-Adressen der Form "stelle@name.ch" vorgesehen, die abhängig von einem absoluten bzw. geographischen Standort anzuwählen sind.

Der vorliegenden Erfindung liegt daher die Aufgabe zugrunde, ein Verfahren anzugeben, dass auf eine automatisierte Weise abhängig vom absoluten Standort eines Kommunikationsgerätes eine relative Adresse einer Diensteanbieterin ermittelt, zu dem eine Verbindung aufbaubar ist.

Diese Aufgabe wird durch die im Patentanspruch 1 angegebenen Massnahmen gelöst. Vorteilhafte Ausgestaltungen der Erfindung sind in weiteren Ansprüchen angegeben.

Durch die Verfahrensschritte,
A vor Aufbau einer Verbindung erfolgt mittels des Ortserkennungsmoduls eine Bestimmung des Aufenthaltsortes (LOC, (x_{LOC}, y_{LOC}); POS, (l_{POS}, b_{POS})) des Kommunikationsgeräts (1);
B mit dem im Verfahrensschritt A bestimmten Aufenthaltsort (LOC, (x_{LOC}, y_{LOC}); POS, (l_{POS}, b_{POS}) ) wird die Zugehörigkeit zu einem Gebiet (A₁, A₂, ..) ermittelt;
C mit der im Verfahrensschritt B ermittelten Zugehörigkeit erfolgt eine Festlegung einer relativen Kommunikationsadresse (0848 xx; stelle@name.ch) aufgrund einer im Kommunikationsgerät (1) gespeicherten gebietsabhängigen Adressdatenstruktur (0848 xx; xy_place@service.ch) ;
wird dem Benutzer die für den gewünschten Dienst im betreffenden Gebiet korrekte Kommunikationsadresse vorgegeben. Dadurch können Fehlverbindungen vermieden werden und es kann Zeit für eine rasche Benachrichtigung gewonnen werden. Ebenso erlaubt die Geschlossenheit dieses Verfahrens eine Implementierung auf eine Vielzahl von verschiedenen Kommunikationsgerätetypen, da keine zentrale Infrastruktur oder keine bestimmte Kommunikationsnetzinfrastruktur erforderlich ist.

So können sich die folgenden Vorteile zusätzlich ergeben:
i) Dadurch dass
   die gespeicherte Adressdatenstruktur (ADDR_STRUCTᵢ) gegliedert ist in diensteabhängige und/oder protokollabhängige Kommunikationsadressen;
   ist der Benutzer des erfindungsgemässen Verfahrens von der Vornahme von weiteren Einstellungen vor Verbindungsaufnahme befreit und dadurch wird die Benutzerfreundlichkeit signifikant erhöht (Patentanspruch 2).
ii) Dadurch dass
   im Verfahrensschritt B die Ermittlung der Zugehörigkeit zu einem Gebiet auf mittels in das Kommunikationsgerät speicherbaren Gebietsdaten (A₁, A₂, ..) basiert;
   sind die Verfahrensschritte zur Ermittlung des tatsächlichen Aufenthaltsortes und der Festlegung der ortsabhängigen Kommunikationsadresse parametrisiert und leicht implementierbar (Patentanspruch 3).
iii) Dadurch dass
   die speicherbaren Gebietsdaten (A₁, A₂, ..) die verschiedenen Gebiete mit einem Polygon (F) oder mit einem Gitternetz (G1) definieren;
   ist die Auflösung in Gebiete der jeweiligen Anwendung anpassbar, ohne dass der Speicherbedarf hiefür übermässig gross wird (Patentanspruch 4).
iv) Dadurch dass
   die speicherbaren Gebietsdaten (A₁, A₂, ..) nach dem Verfahrensschritt C abhängig vom tatsächlichen Aufenthaltsort (POS, LOC) des Kommunikationsgerätes während einer Verbindung aktualisiert und/oder ergänzt werden; ergibt sich eine weitere signifikante Verbesserung der Benutzerfreundlichkeit (Patentanspruch 5).
v) Dadurch dass
   der Abstand der Gitternetzlinien des Gitternetzes (G1) an die geforderte Auflösung in den Gebietsgrenzen anpassbar ist; ergibt sich eine exakte Bestimmung der Kommunikationsadresse ohne dass ein grosser Speicherbedarf für die Speicherung der Gebietsdaten erforderlich ist (Patentanspruch 7).

Die Erfindung wird nachfolgend anhand der Zeichnung beispielsweise näher erläutert. Dabei zeigen:
- Figur 1: Region mit nationalen und intranationalen Grenzen;
- Figur 2: Mobiltelefon mit integriertem Ortserkennungsmodul und Softkeys zur Nutzung der automatisch bestimmten relativen Kommunikationsadresse.

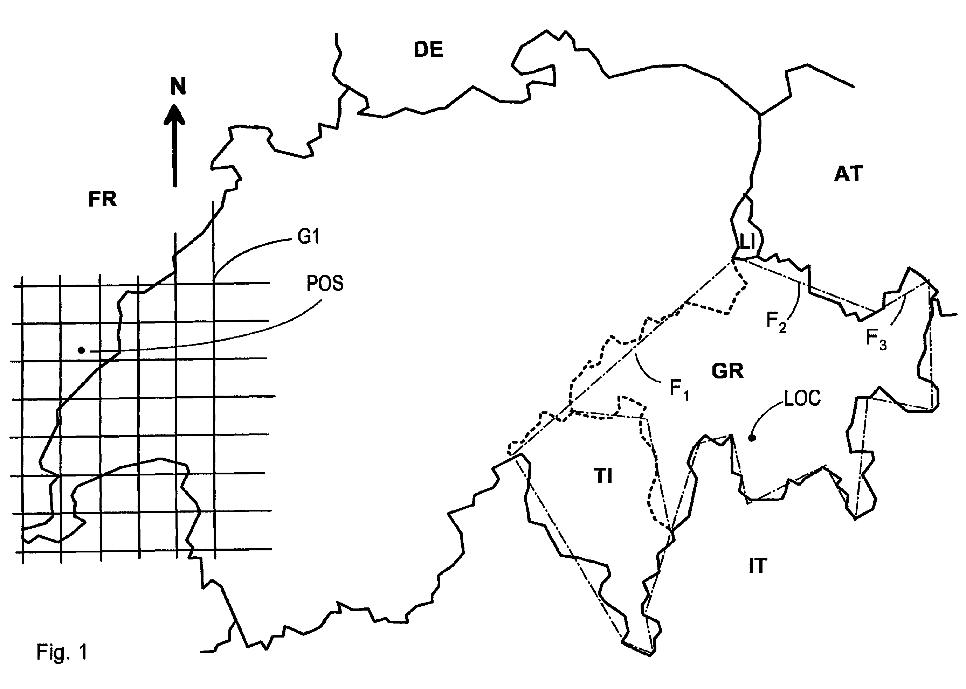

Figur 1 zeigt als Beispiel einer Region die Schweiz CH mit den angrenzenden Staaten FR, IT, AT, LI und DE. Als Beispiele landesinterner Grenzen sind die Kantone GR und TI angegeben. Ein Gebiet A - gemäss der Darstellung in Fig. 1 der Kanton Graubünden GR wird mit einem Polygon F := { F₁, F₂, F₃} mit den Strecken F₁, F₂, F₃ usw. approximiert. Die Strecken Fᵢ sind durch ein Zahlenquadrupel (mᵢ, cᵢ; xᵢ₀, xᵢ₁) beschrieben; wobei i = 1, 2, .. n; n eine natürliche Zahl, z.B. 17, und Fᵢ := {(x, y) | y = fᵢ(x) = mᵢx + cᵢ ; xᵢ₀ <= x <= xᵢ₁ }. Anstelle des Quadrupels (mᵢ, cᵢ; xᵢ₀, xᵢ₁) kann äquivalent dazu auch das die beiden Endpunkte einer Strecke definierende Quadrupel bzw. Punktepaar (xᵢ₀, yᵢₒ) ; (xᵢ₁, yᵢ₁) vorgegeben sein, aus dem das erste Quadrupel (mᵢ, cᵢ; xᵢ₀, xᵢ₁) berechenbar ist. Die Gebiete oder Länder werden als Menge von Paaren von gegenüberliegenden Strecken (F_{k'} , F_{k"}) definiert, wobei je nach topologischer Ausgestaltung - das betreffende Gebiet ist nicht konvex - die Definitionsbereiche eingeschränkt werden müssen. Das Attribut "Gegenüberliegend" ist als in Nord-Süd-Richtung gesehen definiert:
A₁ := { (F_{k'} , F_{k"} ), ..} ;
A₂ := { (F_{m'} , F_{m"} ), ..} ;
Aᵢ := ..

Der Einfachheit halber ist die Indizierung mit k', m", usw. nicht vollständig angegeben.

Zu jedem Gebiet Aᵢ ist in einem Speicherbereich eines einem Ortserkennungsmodul zugeordneten Prozessorsystems eine Adressdatenstruktur ADDR_STRUCTᵢ angelegt, die beispielsweise einen Aufbau gemäss der Darstellung in Tabelle 1 aufweist.

**Tabelle 1**

| ADDR_STRUCTᵢ | |
|---|---|
| Name | Inhalte, Beispiele |
| Emergency_Service_VOICE | 081 257 71 11 |
| Service_Provider_1 | 0848 848 00 |
| Communication_Protocol_1 | V.90; V.34 |
| Service_Provider_2 | 0848 848 01 |
| Communication_Protocol_2 | 64 kBit/transparent; V.110; X.75 |
| URL_1 | http://www.<serviceprovarea>.ch |
| URL_Emergency_secured | https://www.kapos.gr.ch |
| Service_Mail_Addr | xy_place@service.ch |

Je nach Anwendung kann diese Datenstruktur ADDR_STRUCTᵢ noch zusätzliche Felder oder auch nur ein oder zwei Felder für Telefonnummern , vorzugsweise E.164-Nummern, enthalten. Diese Telefonnummern sind für das betreffende Gebiet für den gewöhnlichen Sprachdienst vorgesehen. Für die verschiedenen Gebiete Aᵢ wird vorzugsweise eine Tabelle (Array) von solchen Adressdatenstrukturen ADDR_STRUCTᵢ angelegt, es ist aber auch möglich, diese als Dateityp (FILE) anzulegen und beispielsweise im Kopf der Adressdatenstruktur ADDR_STRUCTᵢ zusätzlich das jeweilige Gebiet codiert oder in einer Kurzform und/oder in einer Klartextform anzugeben.

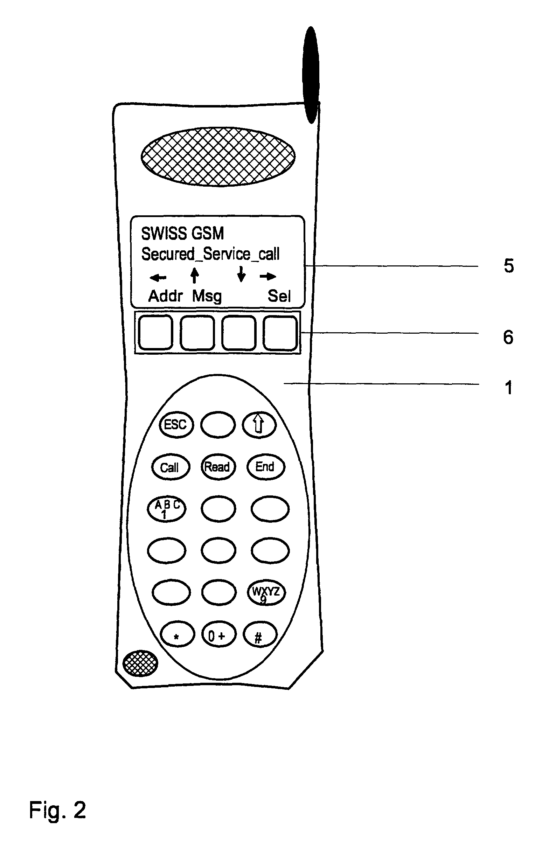

Fig. 2 zeigt ein Mobiltelefon 1 das ein (nicht dargestelltes) Ortserkennungsmodul enthält. Als Ortserkennungsmodul ist vorzugsweise ein sogenannter GPS-Empfänger (GPS: Global Positioning System) vorgesehen, möglich sind aber auch rein terrestrische Ortserkennungsverfahren wie sie für Sicherheitsorganisationen vorgesehen sind. Es wird nun angenommen, dass sich ein vorgenanntes Mobiltelefon 1 im Gebiet des Kantons GR befindet. Das Ortserkennungsmodul kann den aktuellen Aufenthaltsort entweder periodisch oder auf Anforderung des Benutzers ermitteln und zwar in Form eines geordneten Zahlenpaares x, y beispielsweise gemäss dem von der "Schweizerischen Landestopographie" (Bundesamt für Landestopographie) bestimmten Koordinatensystem mit dem Ursprung (0, 0) ausserhalb der Schweiz. Sogenannte GPS-Ortserkennungsmodule zeichnen sich dadurch aus, dass verschiedene Koordinatensysteme einstellbar sind. Für die Bedienung des Mobiltelefons 1 mit dem integrierten Ortserkennungsmodul sind besondere Softkeys 6 vorgesehen, die abhängig vom Inhalt der angezeigten Informationen auf dem Anzeigeelement 5 die entsprechenden Interaktionen durch direkten Tastendruck erlauben.

Das erfindungsgemässe Verfahren wird nachfolgend in zwei verschiedenen Ausführungsformen I und II erläutert.

### I Verfahrensbeschreibung für eine Ausführungsform für ein Mobiltelefon:

Unter dem Begriff "Mobiltelefon" wird ein "Kommunikationsgerät" subsummiert, das für den Sprachdienst z.B. in den Netzen GSM oder UMTS wie auch für Datendienste z.B. SMS oder GPRS oder HSCSD (SMS: Short Message Service; GPRS: General Packet Radio Service; HSCSD: High Speed Circuit Switched Data) vorgesehen ist. Darüber hinaus kann ein solches Kommunikationsgerät zusätzlich einen kleinen "persönlichen digitalen Assistenten PDA" PDA enthalten.

### Verfahrensschritt A

Es wird angenommen, dass das Ortserkennungsmodul für einen tatsächlichen Aufenthaltsort "LOC" - siehe dazu die Figur 1 - in einem Verfahrensschritt A die Koordinaten (x_{LOC}, y_{LOC}) bestimmt hat.

### Verfahrensschritt B

Aus der Bestimmung des tatsächlichen Aufenthaltsortes wird in diesem Verfahrensschritt B die Zugehörigkeit zu einem Gebiet ermittelt. Mit der Abszisse x_{LOC} werden zunächst die zutreffende Definitionsbereiche Dₖ := [xₖ₀, xₖ₁ ] so ermittelt, dass gilt: xₖ₀ <= x_{LOC} <= xₖ₁, dabei steht k für die zutreffenden Indizes aus {1, .. n}. Mit einer Evaluation fₖ(x_{LOC}) und einem Vergleich der Werte fₖ(x_{LOC}) und y_{LOC} für die vorgenannten Indizes k lässt sich nun feststellen, zwischen welchen beiden Strecken F_{k'}, und F_{k"} sich der Aufenthaltsort "LOC" befindet. Das betreffende Paar (F_{k'} , F_{k"}) gehört im vorliegenden Fall zum Gebiet des Kantons Graubünden; siehe dazu die vorstehend zu Fig. 1 gemachten Erläuterungen zur Beschreibung von Gebieten A₁, A₂, usw.

### Verfahrensschritt C

Aus einer in einem Speicherbereich des Mobiltelefons 1 in einer Tabelle (ARRAY) abgelegten Adressdatenstruktur ADDR_STRUCTₖ wird in einem weiteren Verfahrensschritt die Kommunikationsadresse für den gewünschten Dienst entnommen. Vorzugsweise wird die Dienstauswahl, z.B. Sicherheitsdienstrufnummer oder eine bestimmte Diensteanbieterin auf der Anzeigeeinheit 5 des Mobiltelefons 1 angezeigt. Mittels der für diesen Kontext vorgesehenen Softkeys kann der Benutzer den gewünschten Dienst auswählen und es erfolgt ein Verbindungsaufbau. In dieser Ausführungsform sind bevorzugt Telefonnummern für den Sprachdienst vorgesehen, jedoch können ebenso auch Rufnummern für den Datendienst und einem bestimmten Kommunikationsprotokoll gewählt werden.

### II Verfahrensbeschreibung für eine Ausführungsform für ein tragbares Rechnersystem:

Unter "tragbares Rechnersystem" oder "Kommunikationsgerät" werden im folgenden tragbare Personalcomputer, Laptops und "persönliche digitale Assistenten PDA" subsummiert. Je nach Ausführung kann das benötigte Ortserkennungsmodul in einem solchen Kommunikationsgerät integriert, eingesteckt oder über eine verdrahtete oder drahtlose Verbindung zugeordnet sein.

### Verfahrensschritt A:

Es wird angenommen, dass das Ortserkennungsmodul für einen tatsächlichen Aufenthaltsort "POS" - siehe dazu die Figur 1 ausserhalb des westlichen Teils der Schweiz in FR - in einem Verfahrensschritt A die Koordinaten (l_{POS}, b_{POS}) bestimmt hat.

### Verfahrensschritt B

Aus der Bestimmung des tatsächlichen Aufenthaltsortes wird in diesem Verfahrensschritt B die Zugehörigkeit zu einem Gebiet ermittelt. In dieser Ausführungsform wird angenommen, dass über die zu ermittelnden Gebiete ein orthogonales Gitternetz G1, z.B. gemäss den geographischen Längen- und Breitengraden gelegt ist. Die Darstellung in der Figur 1 berücksichtigt aufgrund der Parallelprojektion die resultierende Krümmung nicht; dies ist auf die Orthogonalität aber ohne Einfluss. In einem Speicherbereich des tragbaren Rechnersystems wird ein solches Gitternetz mit den zugeordneten, vom Gebiet abhängigen Inhalt der Adressdatenstruktur in einer geordneten zweidimensionalen Matrix POS_MATRIX gemäss Tabelle 2 abgebildet.

**Tabelle 2**

| Indizes | 1 | 2 | 3 | 4 | 5 |
|---|---|---|---|---|---|
| 1 | A1 | A2 | A1 | NIL | |
| 2 | A3 | A2 | A1 | NIL | A3 |
| 3 | A3 | A2 | A2 | A2 | A3 |
| 4 | A3 | A3 | A3 | A2 | A3 |
| .. | | | | | |

In der Tabelle 2 sind die Zeilen- und Spalteneingänge nur ansatzweise dargestellt. Die Elemente der Matrix POS_MATRIX enthalten eine Gebietsbezeichnung. In einer besonderen Ausführungsform der Erfindung kann vorgesehen sein, für einzelne "Planquadrate" keine solche Zuordnung vorzunehmen, sondern statt dessen eine ortsunabhängige und konstante Kommunikationsadresse vorzusehen. Solche "Planquadrate" weisen als Inhaltselement z.B. den Wert NIL auf. In je einer weiteren eindimensionalen Matrix MERIDIAN_INTERVALLS sind die zu den Längen- und Breitengraden zugehörigen Koordinatenwerte in geordneter Weise enthalten, diese brauchen entgegen der Darstellung in der Figur 1 nicht äquidistant oder von gleichem Bogenmass zu sein. Dadurch können ausgewählte Umgebungen zwischen einer Grenze mit einer höheren Auflösung abgedeckt werden. Einen Ausschnitt aus einer solchen Matrix MERIDIAN_INTERVALLS zeigt Tabelle 3.

**Tabelle 3**

| MERIDIAN_INTERVALLS | | | | | |
|---|---|---|---|---|---|
| Index | 1 | 2 | 3 | 4 | 5 |
| Länge | l₁ | l₂ | l₃ | l₄ | l₅ |

Mit den im Verfahrensschritt A bestimmten Koordinaten (l_{POS}, b_{POS}) werden in den beiden Matrizen MERIDIAN_INTERVALLS gemäss Tabelle 3 und LATITUDE_INTERVALLS (nicht dargestellt) diejenigen Indizes bestimmt, die das Intervall bzw. das "Planquadrat" definieren, in dem sich der im Verfahrensschritt A bestimmte Aufenthaltsort "POS" befindet.

### Verfahrensschritt C

Die Festlegung der relativen Kommunikationsadresse erfolgt im Prinzip gleich wie bei der Ausführungsform für ein Mobiltelefon 1. Da auf einem tragbares Rechnersystem oft verschiedene Protokolle und Zugriffsverfahren installiert sind, wird die Festlegung der relativen Kommunikationsadresse von der von der Anwendung oder vom Benutzer abhängigen Protokoll und Zugriffsverfahren gemacht. Ein solches tragbares Rechnersystem kann dabei z.B. mittels einer PCMCIA-Card (Personal Computer Memory Card International Association) am öffentlichen Telekommunikationsnetz PSTDN/ISDN oder an ein GSM-Netz angekoppelt sein. Dazu enthält die Adressdatenstruktur ADDR_STRUCTₖ die zu den verschiedenen Layern benötigten Angaben.

Die für die Bestimmung eines Gebietes erforderlichen Gebietsdaten sind vorzugsweise in das betreffende Kommunikationsgerät, d.h. Mobiltelefon 1 oder tragbares Rechnersystem ladbar, so dass das Programm zur Ausführung des Verfahrens unabhängig vom jeweiligen Gebiet oder Land oder Kontinent ist. Diese Gebietsdaten können dabei von einem Massenspeicher wie z.B. eine Diskette oder über eine Verbindung von einem Diensteanbieterin in ein solches Kommunikationsgerät geladen werden.

Für die Durchführung des erfindungsgemässen Verfahrens gemäss der Ausführungsform II ist bevorzugt vorgesehen, in die erwähnte PCMCIA-CARD für den Netzanschluss mit den verschiedenen Modemfunktionen auch noch das Ortserkennungsmodul zu integrieren.

Das Laden der Gebietsdaten kann vorteilhafterweise während einer mit Hilfe des erfindungsgemässen Verfahrens aufgebauten Verbindung aktualisiert werden. Aufgrund des Standortes des Kommunikationsgerätes kann vorgesehen werden, die Gebietsdaten zu einer bestimmten Umgebung nachzuladen und dadurch zu ergänzen oder zu aktualisieren. Die Umgebung braucht dabei nicht nach der Grösse, sondern kann auch nach anderen Kriterien bestimmt sein, wie beispielsweise eine Aufteilung in Zonen, die sich aus dem jeweilig benutzen Dienst oder der jeweiligen Anwendung ergeben: Ueberwachungszone, Verkaufsgebiet, usw.

Für den Fall, in dem aus empfangstechnischen Gründen eine aktuelle Ortserkennung nicht möglich ist, kann vorgesehen sein, dass der letzte Aufenthaltsort oder z.B. die letzten zehn Aufenthaltsorte abrufbar sind und dadurch auf partiell manuelle Weise die zutreffende Kommunikationsadresse bestimmbar ist.

### Liste der verwendeten Bezugszeichen

- 1: Mobiltelefon
- 5: Anzeigeelement
- 6: Softkeys
- G1: orthogonales Gitternetz
- F: Polygon
- F₁, F₂, ..: Strecken des Polygons

## Patentansprüche

1. Verfahren zur automatischen Bestimmung einer relativen Kommunikationsadresse (0848 xx; xy_place@service.ch) in einem Kommunikationsnetz von einem mit dem Kommunikationsnetz verbindbaren Kommunikationsgerät (1), welchem ein Ortserkennungsmodul zugeordnet ist,
**gekennzeichnet durch**
folgende Verfahrensschritte:
A vor Aufbau einer Verbindung erfolgt mittels des Ortserkennungsmoduls eine Bestimmung des Aufenthaltsortes (POS, _{LOC} (x_{LOC}, y_{LOC}), (l_{LOC}, b_{LOC}) ) des Kommunikationsgeräts (1);
B mit dem im Verfahrensschritt A bestimmten Aufenthaltsort (POS, _{LOC} (x_{LOC}, y_{LOC}), (l_{LOC}, b_{LOC}) ) wird die Zugehörigkeit zu einem Gebiet (A₁, A₂, ..) ermittelt;
C mit der im Verfahrensschritt B ermittelten Zugehörigkeit erfolgt eine Festlegung einer relativen Kommunikationsadresse (0848 xx; stelle@name.ch) aufgrund einer im Kommunikationsgerät (1) gespeicherten gebietsabhängigen Adressdatenstruktur (0848 xx; xy_place@service.ch).

2. Verfahren nach Anspruch 1,
**dadurch gekennzeichnet, dass**
die gespeicherte Adressdatenstruktur (ADDR_STRUCTᵢ) gegliedert ist in diensteabhängige und/oder protokollabhängige Kommunikationsadressen.

3. Verfahren nach Anspruch 1 oder 2,
**dadurch gekennzeichnet, dass**
im Verfahrensschritt B die Ermittlung der Zugehörigkeit zu einem Gebiet auf mittels in das Kommunikationsgerät speicherbaren Gebietsdaten (A₁, A₂, ..) basiert.

4. Verfahren nach Anspruch 3,
**dadurch gekennzeichnet, dass**
die speicherbaren Gebietsdaten (A₁, A₂, ..) die verschiedenen Gebiete mit einem Polygon (F) oder mit einem Gitternetz (G1) definieren.

5. Verfahren nach Anspruch 3 oder 4,
**dadurch gekennzeichnet, dass**
die speicherbaren Gebietsdaten (A₁, A₂, ..) nach dem Verfahrensschritt C abhängig vom tatsächlichen Aufenthaltsort (POS, _{LOC}) des Kommunikationsgerätes während einer Verbindung aktualisiert und/oder ergänzt werden.

6. Verfahren nach Anspruch 4 oder 5,
**dadurch gekennzeichnet, dass**
der Abstand der Gitternetzlinien des Gitternetzes (G1) an die geforderte Auflösung anpassbar ist.

7. Verfahren nach Anspruch 4 oder 5,
**dadurch gekennzeichnet, dass**
der Abstand der Gitternetzlinien des Gitternetzes (G1) an die geforderte Auflösung in den Gebietsgrenzen anpassbar ist.
